# Europäisches Patentamt

# European Patent Office

# Office européen des brevets

(11) Veröffentlichungsnummer: **0 175 919**
**B1**

(12) **EUROPÄISCHE PATENTSCHRIFT**

(45) Veröffentlichungstag der Patentschrift:
30.03.88

(51) Int. Cl.⁴: **C 07 F 9/50**

(21) Anmeldenummer: **85110427.3**

(22) Anmeldetag: **20.08.85**

(54) Verfahren zur Abtrennung und Reindarstellung von Salzen der Diphenylphosphinphenyl-m-sulfonsäure, Phenylphosphin-di-(m-phenylsulfonsäure) und/oder Triphenylphosphin-tri(m-sulfonsäure).

(30) Priorität: 29.08.84 DE 3431643

(43) Veröffentlichungstag der Anmeldung:
02.04.86 Patentblatt 86/14

(45) Bekanntmachung des Hinweises auf die Patenterteilung:
30.03.88 Patentblatt 88/13

(84) Benannte Vertragsstaaten:
DE FR GB IT NL SE

(56) Entgegenhaltungen:
DE - A - 3 235 030

(73) Patentinhaber: **Ruhrchemie Aktiengesellschaft,**
**Bruchstrasse 219, D-4200 Oberhausen 11 (DE)**

(72) Erfinder: **Bexten, Ludger, Dr. Dipl.-Chem., Im Freihof 9,**
**D-4224 Hünxe (DE)**
Erfinder: **Cornils, Boy, Dr. Dipl.-Chem.,**
**Friedrich-Ebert-Strasse 45, D-4220 Dinslaken (DE)**
Erfinder: **Kupies, Dieter, Burgfeld 143,**
**D-4100 Duisburg 14 (DE)**

(74) Vertreter: **Reichelt, Karl-Heinz, Dr., Ruhrchemie**
**Aktiengesellschaft Abt. PLD Postfach 13 01 60,**
**D-4200 Oberhausen 11 (DE)**

## Beschreibung

Die vorliegende Erfindung betrifft ein Verfahren zur Abtrennung und Reindarstellung von Salzen der Diphenylphosphinphenyl-m-sulfonsäure, Phenylphosphin-di(m-phenylsulfonsäure) und/oder Triphenylphosphin-tri(m-sulfonsäure) aus wässrigen Lösungen.

Sulfonierte Triarylphosphine und ihre Salze sind bekannt. So erhält man das Na-Salz der Diphenylphosphinphenyl-m-sulfonsäure durch Behandlung von Triphenylphosphin mit Oleum und anschliessende Neutralisation des Reaktionsgemisches mit gesättigter Natriumhydroxid-Lösung (Ahrland, Chatt, J. Chem. Soc. 1958, 276). Durch Variation der Reaktionsbedingungen, insbesondere der Reaktionszeit und der Reaktionstemperatur sowie des Verhältnisses von Triphenylphosphin zu Schwefeltrioxid lassen sich auch die di- und trisulfonierten Verbindungen Phenylphosphin-di(m-phenylsulfonsäure) und Triphenylphosphin-tri(m-sulfonsäure) bzw. deren Salze gewinnen.

Statt Natriumhydroxid lassen sich auch andere Basen zur Neutralisation des Sulfonierungsgemisches verwenden. Auf diesem Wege können z.B. das Kaliumsalz und die Erdalkalisalze hergestellt und aus dem Reaktionsgemisch kristallin abgeschieden werden. Die Behandlung eines wasserlöslichen Salzes wie des Natriumsalzes mit einem Kationenaustauscher ergibt die freie Sulfonsäure. Ihre Neutralisation mit Hydroxiden oder Carbonaten ist der Weg zur Herstellung weiterer Verbindungen. Blei-, Zink-, Kupfer-, Ammonium-, quartäre Ammoniumsalze mit Kationen der allgemeinen Formel $N(R_1R_2R_3R_4)^+$, in der $R_1$, $R_2$, $R_3$, $R_4$ jeweils eine geradkettige oder verzweigte $C_1$-$C_4$-Alkylgruppe bedeuten, können so in Form ihrer wässrigen Lösungen und nach Eindampfen vorzugsweise unter vermindertem Druck als Feststoffe gewonnen werden.

Die Salze sulfonierter Triarylphosphine finden auf verschiedenen Gebieten der chemischen Technik Anwendung. Nach der GB-PS 1 006 261 setzt man sie photographischen Emulsionen als Mittel zur Verhinderung der Schleierbildung zu. In der DE-PS 27 33 516 ist ein Verfahren zum Telomerisieren von Dienen durch Umsetzung eines Diens mit einer Verbindung mit beweglichem Wasserstoffatom in Gegenwart eines Katalysators beschrieben, der aus einem Übergangsmetall, insbesondere Palladium oder einer Übergangsmetallverbindung der 8. Gruppe des Periodensystems und einem wasserlöslichen Triarylphosphin der allgemeinen Formel $P(C_6H_4 SO_3M)_n$ $(C_6H_5)_{3-n}$ besteht. Die Anlagerung von Cyanwasserstoff an organische Verbindungen, die mindestens eine ethylenische Doppelbindung enthalten, erfolgt nach der DE-PS 27 00 904 in Gegenwart eines Katalysatorsystems, das neben einer Verbindung des Nickels, Eisens oder Palladiums ein Triphenylphosphinsulfonat enthält. Das in der DE-PS 26 27 354 beschriebene Verfahren zur Herstellung von Aldehyden durch Anlagerung von Kohlenmonoxid und Wasserstoff an Olefine verwendet als Katalysator neben Rhodium wasserlösliche sulfonierte Arylphosphine.

Ein Nachteil der bekannten Verfahren zur Herstellung sulfonierter Arylphosphine ist die Bildung zahlreicher Nebenprodukte, insbesondere der verschiedenen Arylphosphinoxide und der Arylphosphinsulfide. Die Darstellung der reinen Verbindungen aus diesen Gemischen ist nur durch aufwendige und verlustreiche Reinigungsoperationen zu erreichen.

Einen Fortschritt bei der Gewinnung der reinen Verbindungen stellt die in der DE-OS 32 35 030 beschriebene Arbeitsweise dar. Hiernach wird das Sulfonierungsprodukt mit der Lösung eines wasserunlöslichen Amins in einem wasserunlöslichen Lösungsmittel behandelt. Das nunmehr in der organischen Phase vorliegende sulfonierte Triarylphosphin wird mit der wässrigen Lösung einer Base wieder in die wässrige Phase überführt, aus der es schliesslich isoliert werden kann.

Ein entsprechendes Verfahren eignet sich auch zur Rückgewinnung und Reinigung sulfonierter Triphenylphosphine aus Katalysatorsystemen, deren Aktivität nachgelassen hat.

Die in den weiter oben beispielhaft aufgeführten Verfahren eingesetzten, u.a. sulfonierte Triphenylphosphine enthaltenden Katalysatorsysteme unterliegen nämlich einer Reihe aktivitätsmindernder Einflüsse. So wirkt z.B. Eisencarbonyl, das sich während der Reaktion durch Einwirkung von Kohlenmonoxid auf Apparateteile bilden kann, als Katalysatorgift. Die sulfonierten Triphenylphosphine werden teilweise zu inaktiven Phosphinoxiden oxidiert oder spalten unter Bildung ebenfalls inaktiver Reaktionsprodukte Benzolsulfonsäure ab.

Obgleich es, wie geschildert, möglich ist, sulfonierte Triphenylphosphine bzw. deren Salze aus dem bei ihrer Herstellung anfallenden Reaktionsgemisch oder aus inaktiv gewordenen Katalysatorsystemen ohne grossen Aufwand zu gewinnen, besteht ein Interesse nach noch einfacheren Verfahren zu ihrer Abtrennung und Reindarstellung aus wässrigen Lösungen. Speziell bei der Aufarbeitung verbrauchter Katalysatorsysteme ist es erwünscht, die sulfonierten Phenylphosphine so selektiv abzutrennen, dass sie die Metallkomponente des Katalysators nicht enthalten.

Die vorstehend wiedergegebene Aufgabe wird gelöst durch ein Verfahren zur Abtrennung und Reindarstellung von Salzen der Diphenylphosphinphenyl-m-sulfonsäure, Phenylphosphin-di(m-phenylsulfonsäure) und/oder Triphenylphosphin-tri(m-sulfonsäure). Es ist dadurch gekennzeichnet, dass man die wässrige Lösung der Sulfonsäure bzw. Sulfonsäuren oder ihrer Salze mit der äquivalenten oder einer überschüssigen Menge Di-(n-pentyl)amin oder Di-(n-hexyl)amin oder einem wasserlöslichen Salz dieser Amine versetzt, wobei nach der Zugabe des Amins bzw. des Aminsalzes der pH-Wert der wässrigen Lösung ≤ 7 ist, den entstandenen Niederschlag abtrennt, wäscht und anschliessend mit der wässrigen Lösung einer Base umsetzt.

Überraschenderweise ergeben Di-(n-pentyl)amin und Di-(n-hexyl)amin mit Diphenylphosphinphenyl-m-sulfonsäure, mit Phenylphosphin-di(m-phenylsulfonsäure) und mit Triphenylphosphin-tri(m-sulfonsäure) in Wasser und in unpolaren organischen Lösungsmitteln schwer lösliche Salze, die sich in fester Form abscheiden, gut filtrierbar und leicht mit Wasser auszuwaschen sind. Durch diese Eigenschaften unterscheiden sie sich deutlich von den Salzen anderer Amine. So sind z.B. die entsprechenden Sulfonate des Di-(n-butyl)amins und des Tri-(n-butyl)amins in Wasser leicht löslich. Sie eignen sich daher nicht zur Abtrennung der genannten Säuren aus ihren wässrigen Lösungen. Die Sulfonate des Di-(n-octyl)amins und des Tri-(n-octylamins) sind dagegen in Wasser schwer, in nicht oder schwach polaren organischen Lösungsmitteln leicht löslich und von öliger bis sirupöser Beschaffenheit. Sie lösen verschiedene Verunreinigungen, z.B. die Aminsalze der sulfonierten Triphenylphosphinoxide und sind daher zur Reindarstellung der Phosphinsulfonsäuren bzw. deren Salze ungeeignet.

Zur Abtrennung und Reinigung der Diphenylphosphinphenyl-m-sulfonsäure, der Phenylphosphin-di-(m-phenylsulfonsäure) und/oder der Triphenylphosphin-tri(m-sulfonsäure) werden nach der neuen Arbeitsweise Di-(n-pentyl)amin oder Di-(n-hexyl)amin eingesetzt. Sie gelangen in reiner Form, d.h. unverdünnt durch ein Lösungsmittel, zur Anwendung. Statt der Amine können auch ihre wasserlöslichen Salze als Fällungsreagenzien dienen. Aminsalze wird man bevorzugt dann wählen, wenn mit Triphenylphosphinsulfonsäure-Lösungen höherer Konzentration gearbeitet wird oder besonders reine Fällungen erzielt werden sollen. Die gegenüber den Aminen bessere Löslichkeit der Aminsalze in Wasser vereinfacht und beschleunigt in solchen Fällen den Abtrennungsprozess. Geeignete Aminsalze sind z.B. die Halogenide, Acetate und insbesondere die Sulfate und Hydrogensulfate. Weniger geeignet sind Aminsalze oxidierend wirkender Säuren wie die Nitrate wegen der möglichen Überführung der Phosphine in Phosphinoxide.

Nach Zugabe des Amins bzw. des Aminsalzes muss die wässrige Phase, aus der die Ausfällung der Triphenylsulfonsäuren in Form ihrer Salze erfolgte, einen pH-Wert von $\leqslant 7$ aufweisen um sicherzustellen, dass die Sulfonsäuren mit dem Amin die entsprechenden Salze bilden. Hierzu ist es erforderlich, dass die Fällung mit Amin aus einer Lösung erfolgt, die überschüssige Säuren enthält. Man kann auch zu der wässrigen Lösung, die überschüssige Säuren nicht enthält, gleichzeitig Amin und Säure geben oder ihr zunächst Amin und darauf Säure zusetzen. Besonders bewährt hat es sich zu diesem Zweck, Schwefelsäure zu verwenden, jedoch sind auch andere, vorzugsweise nichtoxidierende Säuren wie Salzsäure oder Essigsäure geeignet. Schliesslich kann die neutrale oder saure Lösung auch mit einem Aminsalz umgesetzt werden.

Die Amine bzw. Aminsalze werden, bezogen auf die Triphenylsulfonsäuren, in äquivalenter Menge oder im Überschuss angewendet. Mit Erfolg arbeitet man mit der 1,0- bis 1,5-fach äquivalenten Amin- bzw. Aminsalzmenge.

Ein grosser Überschuss des Fällungsmittels kann dazu führen, dass auch andere Bestandteile der Lösung als die Diphenylphosphinphenyl-m-sulfonsäure, die Phenylphosphin-di(m-phenylsulfonsäure) und die Triphenyphosphin-tri(m-sulfonsäure) abgeschieden werden. Sie bilden auf dem festen Niederschlag der Triphenylphosphinsulfonate eine zähflüssige bis sirupöse Schicht, die im Gegensatz zu den Triphenylphosphinsulfonaten, in organischen Lösungsmitteln, insbesondere in aliphatischen und aromatischen Kohlenwasserstoffen oder in Wasser löslich sind und ohne Mühe entfernt werden können. Zur Erhöhung ihres Lösungsvermögens können den Kohlenwasserstoffen noch Alkohole mit acht und mehr Kohlenstoffatomen, wie 2-Ethylhexanol zugesetzt werden. Alkohole mit drei bis sechs Kohlenstoffatomen lösen die Di-(n-pentyl)amin- und Di-(n-hexyl)-aminsalze der Triphenylphosphinsulfonsäuren und eignen sich daher nicht als Zusatz zu den Kohlenwasserstoffen.

Das neue Verfahren eignet sich zur Abtrennung und Reinigung von Diphenylphosphinphenyl-m-sulfonsäure, Phenylphosphin-di(m-phenylsulfonsäure) und Triphenylphosphin-tri(m-sulfonsäure), die in wässriger Lösung vorliegen. Aus Lösungen, die zwei oder alle drei Verbindungen nebeneinander enthalten, werden die Verbindungen durch Di-(n-pentyl)-amin und Di-(n-hexyl)amin oder deren Salze gemeinsam ausgefällt. Da für viele Anwendungsfälle, z.B. bei Verwendung als Katalysatorbestandteil, das Gemisch von zwei oder drei Sulfonsäuren eingesetzt werden kann, ist eine Auftrennung in die Monosulfonsäure, die Disulfonsäure und die Trisulfonsäure nicht erforderlich.

So können mit Erfolg die bei der Sulfonierung von Triphenylphosphin anfallenden Diphenylphosphinphenyl-m-sulfonsäure, Phenylphosphin-di(m-phenylsulfonsäure) und Triphenylphosphin-tri(m-sulfonsäure) enthaltenden Lösungen unmittelbar, d.h. ohne vorherige Reinigungsschritte, eingesetzt werden. Es ist lediglich erforderlich, sie mit Wasser zu verdünnen, um die Schwefelsäurekonzentration herabzusetzen. Sie kann sich über weite Bereiche erstrecken, bewährt hat es sich, sie auf Werte zwischen etwa 20 und etwa 50 Gew.-%, bezogen auf die Lösung, einzustellen.

Auch aus inaktiv gewordenen wässrigen Katalysatorlösungen, die neben einer Metallkomponente Diphenylphosphinphenyl-m-sulfonsäure, Phenylphosphin-di(m-phenylsulfonsäure) und/oder Triphenylphosphin-tri(m-sulfonsäure) in Form ihrer Salze enthält, lassen sich nach dem erfindungsgemässen Verfahren die Sulfonsäuren ohne Schwierigkeit und in reiner Form abscheiden. Hierzu müssen die organische und die wässrige Lösung voneinander getrennt werden. Die wässrige, Sulfonsäure enthaltende Phase, lässt sich ohne Vorbehandlung, insbesondere ohne vorherige Reinigung einsetzen. Es ist lediglich darauf zu achten, dass der für die Bildung eines Niederschlages notwendige pH-Wert vorliegt. Gegebenenfalls muss also der Lösung eine Säure, zweckmässig Schwefelsäure, zugesetzt werden. Die nach der Abtrennung der Sulfonsäuren zurückbleibende wässrige Phase enthält noch die Metallkomponente des Katalysatorsystems gelöst und kann zu ihrer Rückgewinnung weiter behandelt werden. Die neue Arbeitsweise hat sich bei der Aufarbeitung wässriger Katalysatorlösungen bewährt, die bei der Telomerisierung von Dienen, bei der Anlagerung von Cyanwasserstoff an ethylenisch ungesättigten Verbindungen und bei der Umsetzung von Olefinen mit Kohlenmonoxid und Wasserstoff (Hydroformylierung) anfallen. Neben den Sulfonsäuren können die wässrigen Lösungen noch weitere gelöste Bestandteile enthalten. Insbesondere gehören hierzu die aus den Phenylphosphin-Sulfonsäuren durch Weiterreaktion gebildeten Phosphinoxide und Phosphinsulfide und die durch Spaltung der Phosphor-Kohlenstoffbindung gebildete Benzolsulfonsäure, ferner Salze, die z.B. bei der teilweisen Neutralisation der Sulfonierungsgemische entstehen sowie Metallkomplex-Verbindungen, die in den Katalysatorlösungen vorhanden sind.

Die Konzentration der Triphenylphosphinsulfonsäuren in der wässrigen Lösung ist für die Ausführbarkeit des erfindungsgemässen Verfahrens keine kritische Grösse. Sie können in grosser Reinheit sowohl aus Lösungen höherer Konzentration, z.B. 30 Gew.-% (bezogen auf die Lösung) als auch niederer Konzentration, z.B. 1 Gew.-% (bezogen auf die Lösung) abgetrennt werden. Es hat sich bewährt, mit Lösungen zu arbeiten, deren Triphenylphosphinsulfonsäure-Konzentration 2 bis 15 Gew.-% beträgt.

Die praktische Durchführung der erfindungsgemässen Arbeitsweise ist einfach. Zur wässrigen Lösung der Sulfonsäuren werden unter Rühren anteilsweise bei Raumtemperatur oder unter Kühlung auf −10 bis +10°C das Amin oder die Aminsalzlösung gegeben. Die Aminsalze der Triphenylphosphinsulfonsäuren scheiden sich als wachsartige bis feste Niederschläge ab und können abfiltriert werden. Zur Reinigung wäscht oder knetet man sie mit Wasser und, falls erforderlich, wie weiter oben beschrieben, mit einem organischen Lösungsmittel.

Durch Behandlung mit der wässrigen Lösung, einer Base wie NaOH oder KOH, lassen sich aus dem Di-(n-pentyl)amin oder dem Di-(n-hexyl)aminsalz der Diphenylphosphinphenyl-m-sulfonsäure, der Phenylphosphin-di(m-phenylsulfonsäure) oder der Triphenyl-tri(m-sulfonsäure) wieder Lösungen der entsprechenden wasserlöslichen Salze herstellen. Wegen der geringeren Löslichkeit der Diphenylphosphinphenyl-m-sulfonate in Wasser wird bei Anwesenheit dieser Sulfonsäure die Behandlung bei erhöhten Temperaturen von 40-80°C oder in grösserer Verdünnung vorgenommen. Bei dieser Umsetzung scheiden sich die Amine als mit Wasser nicht mischbare Schicht auf der Wasseroberfläche ab; sie können nach Abtrennung von der wässrigen Phase erneut in dem erfindungsgemässen Verfahren eingesetzt werden.

Die wässrige Lösung der reinen Triphenylphosphinsulfonate kann in vielen Fällen als solche weiterverwendet werden oder durch Ionenaustausch zur Herstellung von Lösungen anderer Salze oder der freien Säure dienen. Schliesslich lassen sich aus ihr auch durch Eindampfen die kristallisierten Salze gewinnen.

In den folgenden Beispielen wird die Erfindung näher beschrieben, in ihrem Schutzumfang jedoch nicht auf diese Ausführungsformen beschränkt.

Folgende Abkürzungen finden Verwendung:

TPPTS     Triphenylphosphin-tri-(natriumsulfonat)
TPPOTS    Triphenylphosphinoxid-tri-(natriumsulfonat)
TPPSTS    Triphenylphosphinsulfid-tri-(natriumsulfonat)
TPPDS     Triphenylphosphin-di-(natriumsulfonat)
TPPODS    Triphenylphosphinoxid-di-(natriumsulfonat)
TPPSDS    Triphenylphosphinsulfid-di-(natriumsulfonat)
TPPMS     Triphenylphosphin-mono-(natriumsulfonat)
TPPOMS    Triphenylphosphinoxid-mono-(natriumsulfonat)
BSNS      Natriumbenzolsulfonat.

### Beispiel 1

Das bei der Umsetzung von Triphenylphosphin mit 20%igem Oleum anfallende Sulfonierungsgemisch wird mit Wasser auf eine Schwefelsäurekonzentration von 30,2 Gew.-% verdünnt. Es hat folgende Zusammensetzung: (Konzentration der Sulfonsäuren gerechnet als Natriumsalze)

| | Gew.-% | mMol/1000 g |
|---|---|---|
| TPPTS | 2,61 | 46,0 |
| TPPOTS | 0,73 | 12,5 |
| TPPSTS | 0,11 | 1,8 |
| TPPDS | 1,02 | 21,9 |
| TPPODS | 0,16 | 3,3 |
| TPPSDS | 0,04 | 0,8 |
| andere Komponente | 0,49 | |

1000 g dieses Reaktionsgemisches werden unter Rühren im Verlauf von 30 min mit 36 g Di-(n-pentyl)amin versetzt. Es wird 30 min nachgerührt, der ausgefallene Niederschlag abfiltriert und mit 333 g Wasser gewaschen. Anschliessend löst man den Niederschlag durch Zugabe von soviel 2 N wässriger Natronlauge, dass die Lösung einen pH-Wert von 11,5 aufweist. Ihre Zusammensetzung ist in Tabelle 1 wiedergegeben. Das zurückerhaltene Di-(n-pentyl)amin kann von der wässrigen Phase abgetrennt und ohne Reinigung erneut zur Fällung eingesetzt werden.

### Beispiel 2

1000 g des Reaktionsgemisches aus Beispiel 1 werden unter Rühren im Verlauf von 30 min mit einer Lösung von 30 g Di-(n-pentyl)amin in 140 g wässriger, 10%iger Schwefelsäure versetzt. Nach weiteren 30 min Rührzeit wird die Fällung wie im Beispiel 1 beschrieben, aufgearbeitet.

Das Ergebnis dieses Versuches ist in Tabelle 1 wiedergegeben.

### Beispiel 3

1000 g des Reaktionsgemisches aus Beispiel 1 werden unter Rühren im Verlauf von 30 min mit einer Lösung von 36 g Di-(n-pentyl)amin in 168 g wässriger, 10%iger Schwefelsäure versetzt. Nach weiteren 30 min Rührzeit wird die Fällung, wie in Beispiel 1 beschrieben, aufgearbeitet.

Das Ergebnis dieses Versuches ist in Tabelle 1 wiedergegeben.

### Beispiel 4

1000 g des Reaktionsgemisches aus Beispiel 1 werden in einem am Boden mit einer Glasfilterfritte und einem Hahn versehenen Dreihalskolben vorgelegt. Es wird unter Rühren im Verlauf von 30 min mit einer Lösung von 36 g Di-(n-pentyl)amin in 168 g wässriger, 10%iger Schwefelsäure versetzt. Nach weiteren 30 min Rührzeit wird das Filtrat am Kolbenboden abgezogen. Der Niederschlag wird zweimal mit jeweils 333 g entionisiertem Wasser jeweils 10 min aufgerührt und vom Waschwasser abfiltriert.

Anschliessend löst man den Niederschlag unter Rühren durch Zugabe von soviel 2 N wässriger Natronlauge, bis sich ein pH-Wert von 11,5 eingestellt hat.

Die Lösung hat die in Tabelle 1 wiedergegebene Zusammensetzung.

Das zurückerhaltene Di-(n-pentyl)amin kann von der wässrigen Phase abgetrennt und ohne Reinigung erneut zur Fällung eingesetzt werden.

### Tabelle 1:
Fällung von Triphenylphosphindisulfonsäure und Triphenylphosphintrisulfonsäure in Form der Di-(n-pentyl)aminsalze aus 30,2%iger Schwefelsäure

| Vers.-Nr. | | 1 | | 2 | | 3 | | 4 | | |
|---|---|---|---|---|---|---|---|---|---|---|
| **Einsatz** | | | | | | | | | | |
| Reaktionsgemisch | g | 1000 | | 1000 | | 1000 | | 1000 | | |
| Di-n-pentylamin | g | 36 | | 30 | | 36 | | 36 | | |
| 10%ige Schwefelsäure | g | — | | 140 | | 168 | | 168 | | |
| **Verhältnis** **TPPDS + TPPTS** Amin | Val./Mol. | 1:1,3 | | 1:1,1 | | 1:1,3 | | 1:1,3 | | |
| **Austrag** | | Fällung | Abfall-säure | Fällung | Abfall-säure und Wasch-wasser | Fällung | Abfall-säure und Wasch-wasser | Fällung | Wasch-wasser | Abfall-säure |
| TPPTS | g | 23,15 | 0,60 | 22,29 | 3,57 | 24,18 | 1,88 | 23,84 | 1,60 | 0,24 |
| TPPOTS | g | 1,10 | 4,90 | 0,49 | 6,81 | 0,47 | 6,69 | 0,28 | 1,22 | 5,82 |
| TPPSTS | g | 0,63 | 0,06 | 0,53 | 0,48 | 0,63 | 0,39 | 0,54 | 0,51 | 0,09 |
| TPPDS | g | 7,15 | 1,71 | 7,88 | 2,24 | 8,89 | 0,66 | 8,82 | 0,40 | 0,78 |
| TPPODS | g | 0,45 | 0,81 | 0,29 | 1,29 | 0,30 | 1,23 | 0,10 | 0,54 | 0,93 |
| TPPSDS | g | 0,27 | 0,03 | 0,22 | 0,20 | 0,28 | 0,11 | 0,21 | 0,16 | 0,02 |
| andere Komponente | | 0,65 | 3,7 | 0,13 | 4,6 | 0,18 | 4,5 | 0,18 | 0,7 | 3,8 |

### Beispiel 5

Das bei der Umsetzung von Triphenylphosphin mit 20%igem Oleum bei 0°C anfallende Sulfonierungsgemisch wird mit Wasser auf eine Schwefelsäurekonzentration von 30 Gew.-% verdünnt und danach von nicht umgesetztem Triphenylphosphin abfiltriert. Es enthält folgende Sulfonsäuren: (die Sulfonsäuren sind in Form der Natriumsalze angegeben).

| | Gew.-% | mMol/1000 g |
|---|---|---|
| TPPMS | 3,05 | 83,7 |
| TPPOMS | 0,14 | 3,7 |

2000 g dieses Reaktionsgemisches werden unter Rühren im Verlauf von 30 min mit einer Lösung von 34 g Di-(n-pentyl)amin in 160 g wässriger, 10%iger Schwefelsäure versetzt (entsprechend 1,3 Mol Amin/Mol TPPMS).

Es wird 30 min nachgerührt, der angefallene Niederschlag abfiltriert und mit 1000 g Wasser gewaschen. Anschliessend löst man den Niederschlag bei 45°C durch Zugabe von soviel 1N wässriger Natronlauge, dass die Lösung einen pH-Wert von 11,5 aufweist. Das zurückerhaltene Di-(n-pentyl)amin kann von der wässrigen Phase abgetrennt und nach Filtration zur Entfernung geringer Anteile TPPMS erneut zur Fällung eingesetzt werden.

Die wässrige Sulfonatlösung enthält 60,3 g TPPMS, das bei Raumtemperatur teilweise als Feststoff ausfällt und 1,4 g TPPOMS. In der Abfallsäure und im Waschwasser verbleiben neben der Schwefelsäure noch 0,65 g TPPMS und 2,3 g TPPOMS.

### Beispiel 6

1000 g einer gebrauchten Rhodium und TPPTS enthaltenden wässrigen Katalysatorlösung werden im Verlauf von 30 min unter Ausschluss von Sauerstoff und unter Rühren mit einer Lösung von 127 g Di-(n-pentyl)amin in 592 g wässriger, 10%iger Schwefelsäure versetzt. Nach weiteren 30 min Rührzeit wird der Niederschlag abfiltriert und mit 500 g Wasser gewaschen. Filtrat und Waschwasser werden vereinigt und gemeinsam analysiert.

Der Niederschlag wird in 107 g 30%iger Natronlauge gelöst. Man erhält 121,8 g Di-(n-pentyl)amin zurück, das ohne Reinigung erneut zur Fällung eingesetzt werden kann.

Die TPPTS-Lösung wird durch Zugabe von 2,7 g konzentrierte Schwefelsäure auf einen pH-Wert von 6,5 eingestellt und analysiert.

Das Ergebnis ist in der folgenden Tabelle 2 zusammengestellt.

*Tabelle 2*

Fällung von Triphenylphosphindisulfonsäure und Triphenylphosphintrisulfonsäure aus einer gebrauchten, wässrigen TPPTS/Rh-Lösung

*Einsatz*

a) TPPTS/Rh-Lösung, gebraucht ... 1000 g

   Di-(n-pentyl)amin ... 127 g
      davon zurückgewonnen ... 121,8 g

   Schwefelsäure, 10%ig ... 592 g
   (Amin/TPPTS +
   TPPDS ... 1,05 Mol/Val)

   entionisiertes Wasser ... 500 g

b) Natronlauge, 30%ig ... 107 g
   Schwefelsäure, konzentriert ... 2,7 g

*Tabelle 2*

*Ergebnis*

| | | TPPTS/ Rh-Lösung gebraucht | TPPTS- Lösung aus Fällung | Filtrat und Wasch- wasser |
|---|---|---|---|---|
| | | 1000 g | 397 g | 1795 g |
| TPPTS | g | 142,4 | 130,6 | 7,50 |
| TPPOTS | g | 47,4 | 4,75 | 48,0 |
| TPPSTS | g | 7,38 | 4,11 | 3,21 |
| TPPDS | g | 4,63 | 4,03 | 0,60 |
| TPPODS | g | 10,5 | 0,72 | 10,1 |
| TPPSDS | g | 0,67 | 0,53 | |
| BSNS | g | 7,36 | 0,38 | 6,79 |
| andere Komponente | | 44 | 1,4 | 40,0 |
| Rh | in % | 100 | 2,7 | 97,0 |
| Fe | in % | 100 | 9,0 | 88,2 |

**Beispiel 7**

Beispiel 6 wird wiederholt, jedoch Di-(n-hexyl)amin anstelle von Di-(n-pentyl)amin eingesetzt.

Das Ergebnis dieses Versuches ist in Tabelle 3 zusammengestellt.

*Tabelle 3*

Fällung von Triphenylphosphindisulfonsäure und Triphenylphosphintrisulfonsäure aus einer gebrauchten, wässrigen TPPTS/Rh-Lösung

*Einsatz*

a) TPPTS/Rh-Lösung, gebraucht ... 1000 g

   Di-(n-hexyl)amin ... 138 g
      davon zurückgewonnen ... 112 g

   Schwefelsäure, 10%ig ... 546 g
   (Amin/TPPTS +
   TPPDS ... 1,10 Mol/Val)

   entionisiertes Wasser ... 1500 g

b) Natronlauge, 30%ig ... 109 g
   Schwefelsäure, konzentriert ... 1,7 g

*Tabelle 3*

*Ergebnis*

| | | TPPTS/ Rh-Lösung gebraucht | TPPTS- Lösung aus Fällung | Filtrat und Wasch- wasser |
|---|---|---|---|---|
| | | 1000 g | 591 g | 2688 g |
| TPPTS | g | 126,8 | 104,2 | 16,8 |
| TPPOTS | g | 51,2 | 6,4 | 49,0 |
| TPPSTS | g | 5,2 | 4,2 | 0,6 |
| TPPDS | g | 0,7 | 0,6 | |
| TPPODS | g | 14,7 | 5,2 | 9,6 |
| TPPSDS | g | 0,2 | 0,1 | |
| BSNS | g | 6,9 | 3,1 | 3,7 |
| andere Komponente | | 28 | 8 | 20 |
| Rh | % | 100 | 13,6 | 85,7 |
| Fe | % | 100 | 11,6 | 84,8 |

**Beispiel 8**

Der Versuch beschreibt die gleichzeitige Fällung von Triphenylphosphindisulfonsäure und Triphenylphosphintrisulfonsäure und die Extraktion des Rhodiums aus einer gebrauchten wässrigen Katalysatorlösung, wie sie bereits in den Beispielen 6 und 7 eingesetzt worden war. Die Arbeiten erfolgen in Stickstoffatmosphäre.

In einem Becherglas werden 100 g als Katalysator gebrauchte, wässrige TPPTS/Rh-Lösung, 100 g Toluol und 30 g 2-Ethylhexanol vorgelegt und unter Rühren im Verlauf von 30 min mit einer wässrigen Lösung von 18,5 g Di-n-pentylamin in 85 g wässriger 10%iger Schwefelsäure versetzt. Nach weiteren 30 min Rührzeit wird der Niederschlag in einer Glasfilternutsche abfiltriert und im $N_2$-Strom weitgehend

getrocknet. Der Niederschlag wird zunächst mit einem Gemisch aus 80 g Toluol und 20 g 2-Ethylhexanol und danach mit 500 g Wasser gewaschen. Filtrat und Waschlösungen werden vereinigt, in Wasserphase und Toluolphase aufgetrennt und getrennt analysiert.

Der Niederschlag wird in 80 g 1 N wässriger Natronlauge gelöst, die entstandene Amin/Toluol-Phase abgetrennt. Die wässrige Lösung wird durch Zugabe von 1,3 g Schwefelsäure auf einen pH-Wert von 6,5 eingestellt und analysiert.

Das Ergebnis dieses Versuches ist in Tabelle 4 zusammengestellt.

*Tabelle 4*

Gleichzeitige Fällung von Triphenylphosphindisulfonsäure sowie von Triphenylphosphintrisulfonsäure und Extraktion des Rhodiumkomplexes

*Einsatz*

| | | |
|---|---|---|
| a) | TPPTS/Rh-Lösung, gebraucht | 100 g |
| | Toluol (Extraktionsmittel) | 100 g |
| | 2-Ethylhexanol (Lösungsvermittler) | 30 g |
| | Di-n-pentylamin (FG 157,3) | 18,5 g |
| | Schwefelsäure 10%ig | 85 g |
| | (Amin/TPPTS + | |
| | TPPDS   1,75 Mol/Val) | |
| | Toluol | 80 g |
| | 2-Ethylhexanol | 20 g |
| | entionisiertes Wasser | 500 g |
| b) | Natronlauge, 1 N | 80 g |
| | Schwefelsäure, konzentriert | 1,3 g |

*Tabelle 4*

*Ergebnis*

| | | TPPTS/ Rh-Lösung gebraucht | TPPTS-Lösung aus Fällung | Filtrat: Toluolphase | Filtrat: Wasserphase |
|---|---|---|---|---|---|
| | | 100 g | 117 g | 204 g | 639 g |
| TPPTS | g | 12,68 | 9,01 | 1,99 | 0,21 |
| TPPOTS | g | 5,12 | 0,38 | 0,60 | 5,35 |
| TPPSTS | g | 0,52 | 0,16 | 0,26 | 0,10 |
| TPPDS | g | 0,07 | 0,04 | 0,02 | |
| TPPODS | g | 1,47 | | 0,43 | 1,08 |
| TPPSDS | g | 0,02 | | 0,01 | |
| BSNS | g | 0,69 | | 0,12 | 0,53 |
| andere Komponente | | 2,79 | 0,04 | 0,41 | 2,0 |
| Rh | % | 100 | 1,9 | 81,8 | 16,3 |

**Patentansprüche**

1. Verfahren zur Abtrennung und Reindarstellung von Salzen der Diphenylphosphinphenyl-m-sulfonsäure, Phenylphosphin-di(m-phenylsulfonsäure) und/oder Triphenylphosphin-tri(m-sulfonsäure), dadurch gekennzeichnet, dass man die wässrige Lösung der Sulfonsäure bzw. Sulfonsäuren oder ihrer Salze mit der äquivalenten oder einer überschüssigen Menge Di-(n-pentyl)amin oder Di-(n-hexyl)amin oder einem wasserlöslichen Salz dieser Amine versetzt, wobei nach der Zugabe des Amins bzw. des Aminsalzes der pH-Wert der wässrigen Lösung ⩽7 ist, den entstandenen Niederschlag abtrennt, wäscht und anschliessend mit der wässrigen Lösung einer Base umsetzt.

2. Verfahren nach Anspruch 1, dadurch gekennzeichnet, dass das Amin bzw. Aminsalz, bezogen auf die Sulfonsäure, in der 1,0- bis 1,5-fache äquivalenten Menge eingesetzt wird.

3. Verfahren nach Anspruch 1 und 2, dadurch gekennzeichnet, dass die Konzentration der Triphenylphosphinsulfonsäure in der wässrigen Lösung 2 bis 15 Gew.-%, bezogen auf die Lösung, beträgt.

4. Verfahren nach Anspruch 1 bis 3, dadurch gekennzeichnet, dass die Zugabe des Amins bzw. des Aminsalzes bei −10 bis +10°C erfolgt.

5. Verfahren nach Anspruch 1 bis 4, dadurch gekennzeichnet, dass der durch Zugabe des Amins bzw. Aminsalzes entstandene Niederschlag mit Wasser und gegebenenfalls mit einem aliphatischen oder aromatischen Kohlenwasserstoff gewaschen wird.

6. Verfahren nach Anspruch 1 bis 5, dadurch gekennzeichnet, dass als wässrige Lösung der Sulfonsäure bzw. Sulfonsäuren oder ihrer Salze das bei der Sulfonierung von Triphenylphosphin mit Oleum anfallende und mit Wasser verdünnte Reaktionsgemisch eingesetzt wird.

7. Verfahren nach Anspruch 1 bis 5, dadurch gekennzeichnet, dass als wässrige Lösung der Sulfonsäure bzw. Sulfonsäuren oder ihrer Salze Katalysatorlösungen, die neben einer Metallkomponente Phenylphosphin-di(m-phenylsulfonsäure) und/oder Triphenylphosphin-tri(m-sulfonsäure) in Form ihrer Salze enthalten, eingesetzt werden.

**Claims**

1. A process for the separation and purification of salts of diphenylphosphinephenyl-m-sulfonic acid, phenylphosphine-di(m-phenylsulfonic acid) and/or triphenylphosphine-tri(m-sulfonic acid), characterised in that the aqueous solution of the sulfonic acid or sulfonic acids or their salts is mixed with the equivalent or an excess amount of di(n-pentyl)amine or di(n-hexyl)amine or a water-soluble salt of said amine, whereby following the addition of the amine or amine salt the pH value of the aqueous solution is ⩽7, the precipitate formed is separated, washed and subsequently reacted with the aqueous solution of a base.

2. A process according to claim 1, characterised in that the amine or amine salt is added in an amount corresponding to 1.0 to 1.5 equivalents, related to the amount of sulfonic acid.

3. A process according to claim 1 and 2, characterised in that the concentration of the triphenylphosphine sulfonic acid in the aqueous solution is 2 to 15 wt.-%, related to the solution.

4. A process according to claims 1 to 3, characterised in that the amine or amine salt is added at a temperature of −10 to +10°C.

5. A process according to claims 1 to 4, characterised in that the precipitate formed by the addition of the amine or amine salt is washed with water and, if necessary, with an aliphatic or aromatic hydrocarbon.

6. A process according to claims 1 to 5, characterised in that the reaction mixture formed during the sulfonation of triphenylphosphine with oleum and diluted with water is used as the aqueous solution of the sulfonic acid or sulfonic acids or their salts.

7. A process according to claims 1 to 5, characterised in that catalyst solutions which apart from a metal component contain phenylphosphine-di(m-phenyl sulfonic acid) and/or triphenylphosphine-tri-(m-sulfonic acid) in the form of their salts are used as an aqueous solution of the sulfonic acid or sulfonic acids or their salts.

## Revendications

1. Procédé pour séparer et isoler à l'état pur des sels de l'acide diphénylphosphine-phényl-m-sulfonique, de l'acide phénylphosphine-di-(m-phénylsulfonique) et/ou de l'acide triphénylphosphine-tri-(m--sulfonique), caractérisé en ce que l'on ajoute à la solution aqueuse de l'acide sulfonique ou des acides sulfoniques ou de leurs sels la quantité équivalente ou un excès de di-(n-pentyl)-amine ou de di-(n--hexyl)-amine ou d'un sel soluble dans l'eau de ces amines, le pH de la solution aqueuse devant être inférieur ou égal à 7 après l'addition de l'amine ou du sel d'amine, on sépare le précipité formé, on le lave puis on le fait réagir avec la solution aqueuse d'une base.

2. Procédé selon la revendication 1, caractérisé en ce que l'on utilise l'amine ou le sel d'amine en quantité de 1,0 à 1,5 fois la quantité équivalente par rapport à l'acide sulfonique.

3. Procédé selon les revendications 1 et 2, caractérisé en ce que la concentration de l'acide triphénylphosphine-sulfonique dans la solution aqueuse est de 2 à 15% du poids de cette dernière.

4. Procédé selon les revendications 1 à 3, caractérisé en ce que l'on ajoute l'amine ou le sel d'amine à une température de −10 à +10°C.

5. Procédé selon les revendications 1 à 4, caractérisé en ce qu'on lave le précipité formé par addition de l'amine ou du sel d'amine à l'aide d'eau et le cas échéant d'un hydrocarbure aliphatique ou aromatique.

6. Procédé selon les revendications 1 à 5, caractérisé en ce que la solution aqueuse d'acide sulfonique ou d'acides sulfoniques ou de sels d'acides sulfoniques mise en oeuvre est le mélange de réaction obtenu à la sulfonation de la triphénylphosphine par l'oléum, dilué par l'eau.

7. Procédé selon les revendications 1 à 5, caractérisé en ce que la solution aqueuse d'acide sulfonique ou d'acides sulfoniques ou de sels d'acides sulfoniques mise en oeuvre consiste en une solution de catalyseur contenant, en plus d'un composant métallique, l'acide phénylphosphine-di-(m-phénylsulfonique) et/ou triphénylphosphine-tri-(m-sulfonique) à l'état de sels.